Europäisches Patentamt

European Patent Office

Office européen des brevets

(11) Veröffentlichungsnummer: **0 339 525**
**A2**

## EUROPÄISCHE PATENTANMELDUNG

(21) Anmeldenummer: **89107300.9**

(51) Int. Cl.⁴: **F16L 55/10**

(22) Anmeldetag: **22.04.89**

(30) Priorität: **25.04.88 DK 2251/88**

(43) Veröffentlichungstag der Anmeldung:
**02.11.89 Patentblatt 89/44**

(84) Benannte Vertragsstaaten:
**AT BE CH DE ES FR GB GR IT LI LU NL SE**

(71) Anmelder: **Schnorrer, Walter**
**Ryesgade 40**
**DK-9000 Aalborg(DK)**

(72) Erfinder: **Schnorrer, Walter**
**Ryesgade 40**
**DK-9000 Aalborg(DK)**

(74) Vertreter: **Hennicke, Albrecht, Dipl.-Ing. et al**
**Patentanwälte Dipl.-Ing. Buschhoff Dipl.-Ing.**
**Hennicke Dipl.-Ing. Vollbach**
**Kaiser-Wilhelm-Ring 24 Postfach 190 408**
**D-5000 Köln 1(DE)**

(54) **Vorrichtung zum zeitweiligen Abdichten von einem Rohrende bei Fernheizungs-, Wasserversorgungs- und Abwasserrohren.**

(57) Vorrichtung zum zeitweiligen Verschließen der Rohrenden von Fernheiz-, Versorgungs- oder Abwasserleitungen mit einem Haltestück (3), welches das Rohrende (1) mit Abstand umgibt und an diesem mit radial angeordneten Befestigungsschrauben (4) festgeklemmt ist. Das Haltestück (3) hat in Axialrichtung sich erstreckende Gewindestangen (6, 8), auf die eine Verschlußplatte (9) aufgesteckt wird. Die Verschlußplatte (9) liegt mit einer Dichtung (10 bzw. 13) am freien Stirnrand (2) des Rohrendes (1) an und wird mit Muttern (12) fest gegen den Stirnrand gezogen. Mit der Verschlußeinrichtung können auch schräg abgeschnittene Rohrenden und die Enden von Rohren unterschiedlichen Durchmessers einfach und sicher verschlossen werden.

Fig. 1

## Vorrichtung zum zeitweiligen Abdichten von einem Rohrende bei Fernheizungs-. Wasserversorgungs- und Abwasserrohren

Bei Rohrverlegungsarbeiten, namentlich in der Fernheizbranche, ist es vor der Inbetriebnahme einer Rohrstrecke oft erforderlich, diese einem Drucktest auszusetzen. Voraussetzung für diese Tests ist das zeitweilige Verschliessen der Rohrstrecke. Derartige Rohrstrecken enthalten in den meisten Fällen keine geeigneten Elemente oder Vorrichtungen, wie z.B. Schieber, Klappen oder Ventile, zur Durchführung dieser Tests.

Bei Rohren von geringeren Durchmessern, und die mittels Gewinde zusammengeschraubt werden, kann man daher am Rohrende ein Gewinde schneiden und eine Endkappe aufschrauben. Bei Rohren von grösseren Durchmessern, bei denen das Ende der druckzuprüfenden Strecke später mit dem nachfolgenden Rohrabschnitt verschweisst werden soll, wird das Rohrende in der Regel durch einen aufgeschweissten Deckel, der nach Beendigungdes Drucktests wieder abgetrennt wird, verschlossen. Das führt zu einer gewissen Verkürzung des zeitweilig verschlossenen Rohrendes; darüberhinaus werden durch die Schweissarbeiten beim Verschliessen und dem späteren Abtrennen des Dekkels Energie und Material verbraucht, und überdies bedeutet das nachfolgende Zurichten und Anpassen des Rohrendes einen beträchtlichen Zeitaufwand.

Aus der US Patentschrift Nr. 2 763 293 ist eine Vorrichtung zum zeitweiligen Verschliessen eines Rohrendes bekannt. Die Vorrichtung besteht aus einem Endstück, einer elastischen Dichtung auf dem Endstück (berechnet zur Auflage an dem Rohrende), Elemente für das Zusammendrücken der Dichtung sowie einem, in Verbindung mit dem Endstück angeordneten Haltestück, das über das Rohrende geschoben werden kann. Das Haltestück ist mit einem (oder mehrerem) lösbaren Befestigungselement versehen, das so eingerichtet ist, dass es in Eingriff mit der glatten äusseren Oberfläche des Rohres gebracht werden kann, um ein Verschieben des Haltestückes in Richtung Rohrende zu verhindern. Die Erfindung, von der hier die Rede ist, betrifft eine derartige Vorrichtung.

Bei der bekannten Vorrichtung bilden Endstück und Haltestück eine Einheit, und durch einige kurze Schrauben im Haltestück wird die Vorrichtung auf dem Rohrende fixiert. Mit Hilfe dieser Konstruktion ist es bisher jedoch nicht möglich, die Dichtung axial zwischen Endstück und der achsrecht wendenden Fläche des Rohrendes zusammenzupressen, weil die Vorrichtung mit einer axialgehenden Schraube versehen ist, die durch das Endstück führt und Verbindung mit einer Druckplatte hat, welche während der Anwendung inwendig im Rohr plaziert ist, und die zusammen mit der Schraube die Dichtung so zusammenpressen kann, dass das Dichtungsmaterial in Querrichtung expandiert und dadurch eine Dichtung zwischen der Vorrichtung zwischen der Vorrichtung und dem Rohrende gebildet wird. Mittels dieser Konstruktion, die überdies nur einem äusserst geringen Druck standhält, ist es nicht möglich, mehrere verschiedene Rohrdimensionen mit demselben Werkzeug zu verschliessen.

Die vorliegende Erfindung hat die Aufgabe, eine Vorrichtung nachzuweisen, die in Verbindung mit dem zeitweiligen Verschliessen von Rohren mit mehreren verschiedenen Dimensionen und Wandungsstärken Anwendung finden kann. Andere Ziele der Erfindung bestehen darin, Möglichkeiten für das zeitweilige Verschliessen von schräg abgetrennten Rohren, wie z.B. abgetrennten Gusseisenrohren, zu bieten, sowie einen druckdichten Verschluss, z.B. während der Druckerprobung von Fernheizrohren, zu schaffen.

Diese Aufgabe wird gemäss die Erfindung mit einer Vorrichtung wie der unter der Einleitung zum Patentanspruch 1 angegebenen Art gelöst, deren charakteristischen Eigenheiten darin bestehen, dass Haltestück und Endstück untereinander ein lösbar verbundenes Verbindungselement vom Schrauben Mutter-Typ ausmachen, besonders mit auf dem Haltestück befestigten und in Axialrichtung gerichteten Gewindestangen, die mittels Muttern das Endstück festhalten und gleichzeitig die Dichtung gegen das Rohrende pressen, und ferner, dass die lösbaren Befestigungselemente Rillen oder ähnliche Oberflächenbeschaffenheit in den Bereichen aufweisen, die zur Auflage auf der Oberfläche des Rohres berechnet sind.

Gemäss die Erfindung sind Haltestück und Endstück in zwei separate Teile getrennt. Das Haltestück wird über das Rohrende geschoben und beispielsweise mit Hilfe von Schrauben an der Aussenseite des Rohres befestigt. Danach wird das Endstück auf das Rohrende gesetzt, und mittels Muttern, die entweder direkt auf dem Endstück oder auf dem Haltebeschlag ansetzen, wird das Endstück gegen das Rohrende gespannt. Das Endstück kann ebenso wie die Dichtung plan ausgeformt werden, wodurch mehrere verschiedene Rohrdimensionen durch ein und dasselbe Werkzeug geschlossen werden können. Auf Grund dieser Konstruktion lassen sich schräge, unregelmässige Rohrendflächen durch leichte Schrägstellung des Endstücks und entsprechendesspannen der Muttern gegen die Endstücke kompensieren. Soll ein Rohr während der Anwendung der Vorrichtung einer Druckprobe ausgesetzt werden, sorgt das Rillenprofil der Befestigungselemente dafür, das selbst grosse Druckkräfte die Vorrichtung nicht vom Rohrende reissen können.

Patentansprüche 2 und 3 beschreiben gemäss die Erfindung veschiedene ausführungsformen für die Vorrichtung. Bei der im Anspruch 3 angegebene Ausführungsform besteht der Vorteil darin, dass die Befestigungselemente als Exzenter-Spannanordnung fungieren, und dass man auf diese Weise das Haltestück lediglich über das Rohrende führen kann, wonach ein Zug inRichtung auf das Rohrende bewirkt, dass die Befestigungselemente gegen die äussere Oberfläche des Rohres gepresst werden. Anschlieend sind lediglich die anderen Befestigungselemente anzuspannen.

In einer besonders einfachen Ausführung der Befestigungselemente, wie unter Anspruch 4 angegeben, sind die schwenkbaren Teile wie zirkuläre oder ellipsenförmige Scheiben aus Zapfen gelagert, quer über Öffnungen im Haltestück angebracht, dessen Zapfen durch exzentrisch in den Scheiben plazierten Bohrungen führen.

Eine bevorzugte Ausführung im Hinblick auf die Anwendung bei Rohrarbeiten, bei denen es sich um standarisierte Rohrdimensionen Handelt, ist bei Anspruch 5 dargestellt. Sofern die Endstükke auf diese Weise Abstufungen in Form von konzentrischen Kreisen aufweisen und die Dichtungen somit in diesen Abstufungen liegen, wird durch die axial verlaufenden Wandungen zwischen den Abstufungen sowohl verhindert, dass die Dichtungen radial in Richtung Peripherie des Endstückes auswandern, als auch erreicht, dass die Dichtungen zwischen axialer Wandung und achsrechter Fläche des Rohres zusammengepresst werden, sodass dergestalt ein zweifacher Dichtungseffekt erzielt wird.

Im folgenden wird die Erfindung unter Bezugnahme auf die Zeichnung näher dargestellt, von deren:

Figur 1 einen Querschnitt von zwei Ausführungsformen der Vorrichtung gemäss Erfindung zeigt,

Figur 2 einen Querschnitt einer dritten Ausführungsform von der Erfindung zeigt,

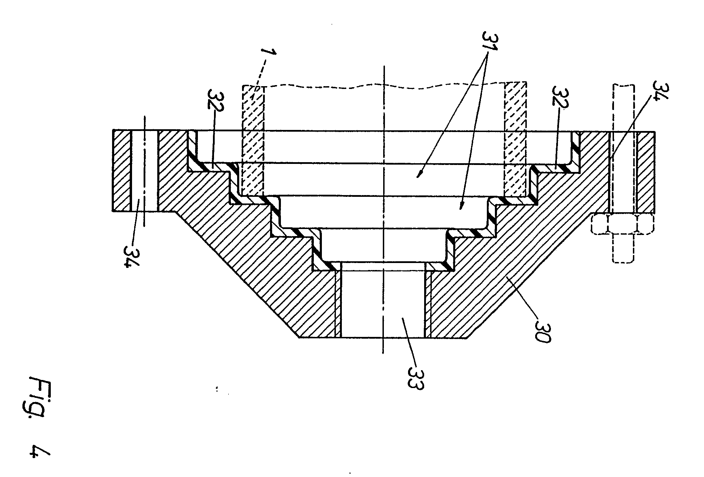

Figur 3 ein Befestigungselement, dargestellt nach den Linien III-III in Fig. 2, zeigt,

Figur 4 den Schnitt durch ein Endstück gemäss Erfindung in einer dritten Ausführungsform zeigt.

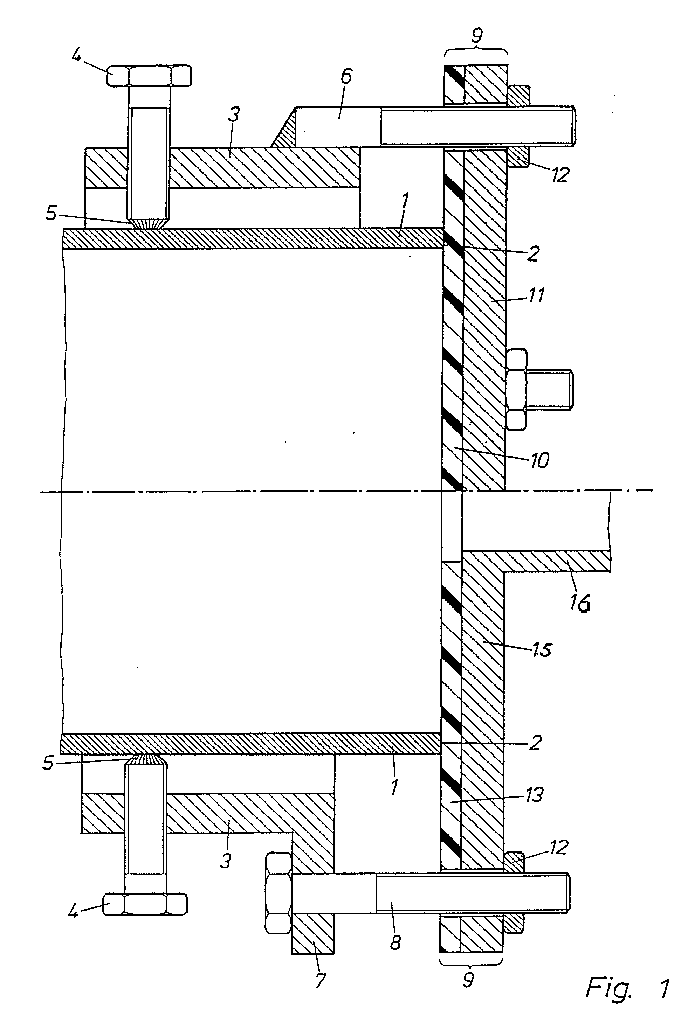

Eine Vorrichtung zum zeitweiligen Verschliessen von einem Rohrende gemäss die Erfindung ist bei Fig. 1 dargestellt, wo in der oberen bzw. der unteren Hälfte der Abbildung zwei verschiedene Ausführungen der Vorrichtung dargestellt sind.

Mit Hilfe von radial gerichteten Schrauben 4 ist aussenseitig und in der Nähe des endes 2 auf einem Stahl- oder Gusseisenrohr 1 ein Hohlzylinder aus Stahl oder Aluminium 3 befestigt. Die Schrauben 4 sind an dem Ende 5, das andem Rohr 1 anliegt, mit quergerillten (gerändelten) Kratern für die Befestigung der Vorrichtung versehen. Auf dem Umfang des Zylinders 3 ist eine passende Anzahl, drei oder mehr, Schrauben 4, verteilt.

Auf dem Zylinder 3 des in der oberen Hälfte der Fig.1 dargestellten Ausführungsbeispiels ist aussenseitig eine axialausgerichtete Gewindestange 6 aufgeschweisst. Unter axialausgerichtet ist hier die Parallelrichtung zur Symmetrieachse des Rohres 1 gemeint. In dem, in der unteren Hälfte gezeigten Ausführungsbeispiel ist der Zylinder 3 mit einem nach aussen gerichteten Flansch 7 versehen, durch dessen axiale Bohrungen die Schrauben 8 geführt werden. Die Längen der Gewindestangen 6 und der Schrauben 8 sind so bemessen, dass sie über das Rohrende 2 hinausragen können. Die im oberen Teil der Abbildung dargestellte Ausführungsform wird jedoch bevorzugt, da diese weniger lose Teile aufweist und auch keinen Flansch 7 benötigt.

Das Rohrende 2 ist mittels eines Abschlussdeckels 9 geschlossen. Im oberen Teil der Zeichnung besteht der Deckel aus einer elastischen Dichtung in Form einer Gummiplatte 10, die durch eine Stahl- oder Aluminiumplatte 11 gestützt wird. Die Gummiplatte 10 und die Stahl- oder Aluminiumplatte 11 sind mit axialen Bohrungen versehen, die über die Gewindestangen 6 geführt werden. Mit Hilfe der Muttern 12 wird der Abschlußdeckel 9 gegen das Rohrende gespannt, wobei die Gummiplatte 10 als Dichtung dient.

Im unteren Teil der Zeichnung besteht der Abschlußdeckel 9 aus einem Gummiring 13, der als Dichtung für das Rohrende 2 dient und der mittels einer Stahlplatte 15 gehalten wird, in deren zentrischer, durchgeführter Bohrung ein Rohrstutzen 16 eingeschweißt ist. Der Rohrstutzen 16 kann für die Einspeisung eines Druckprobemittels, wie z.B. Luft oder Wasser, in das Rohr 1 verwendet werden. Auch hier ist der Abschlußdeckel 9 an den Bolzen 8 mittels der Muttern 12 festgespannt. Der Rohrstutzen 16 kann natürlich auch für andere Zwecke benutzt werden, z.B. für die Einspeisung von heißem Wasser bei der Erhitzung von Kompensatoren, d.h. eine Verlängerung der Rohre aufgrund von Temperaturschwankungen.

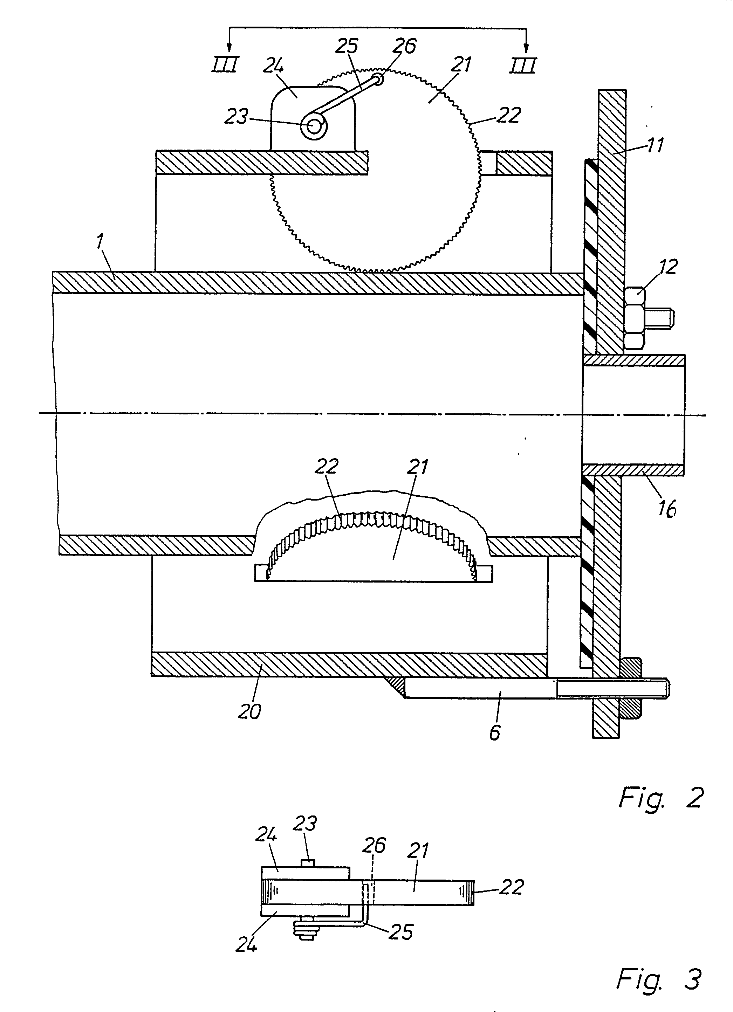

Die in der Fig. 2 dargestellte Ausführungsform der Erfindung ist mit einem Hohlzylinder 20 versehen. Statt der Schrauben zur Befestigung des Zylinders 20 sind hier mindestens drei kreisförmige Plattenstücke oder Scheiben 21 mit gerändelten Umfangskanten 22 vorgesehen. Die Plattenstücke 21 können z.B. aus gehärtetem Stahl hergestellt werden, so daß die Kanten 22 in die glatte Oberfläche des Rohres 1 eingreifen können. Die Scheiben 21 sind jeweils einzeln mit einer Achse 23 in einem auf dem Zylinder 20 aufgeschweißten Halter 24 gelagert. Auf der Achse 23 ist eine Feder 25 angebracht, die sich am Halter 24 abstützt und in die Scheibe 21 eingreift, wobei das Ende der Feder in eine Bohrung 26 der Scheibe 21 einhakt.

Mit Hilfe dieser Konstruktion vermeidet man das zeitraubende Ein- und Ausschrauben der Halteschrauben 4, da der Zylinder 20 lediglich über das Rohrende 1 - siehe rechte Hälfte der Fig. 2 - geführt wird, wo nach man durch Anspannen der Muttern 12 auf denGewindestangen 6 den Zylinder 20 gegen das Rohrendezieht. Dadurch entsteht ein selbstblockierender Effekt, dasich die Kanten 22 der Scheiben 21 auf dem Rohr 1 festsetzen werden und dadurch die Scheiben 21 nach innen gegen das Rohr geschwenkt werden. Selbstverständlich können die Scheiben 21 eine andere Ausformung bekommen, doch ist diese Form eine der kostengünstigsten in der Herstellung.

Anstatt eines plan ausgeformten Abschlussdeckels 11 als Endstück, kann dieses auch eine Form, wie sie in der Fig. 4 dargestellt ist, aufweisen, wo das fast schalenförmige Endstück mit inwendigen Abstufungen in der Form von konzentrischen Kreisen, in Axialrichtung gesehen, versehen ist. Jeder Abschnitt der Abstufung ist mit einer Lage aus elastischem Dichtungsmaterial versehen, oder es wird, wie in der Abbildung dargestellt, ein Stück Gummi 32 auf vulkanisiert, das alle Abschnitte 31 deckt. Dieses Endstück 30 kann zur Einspeisung eines Druckprobemittels mit einer, mit einem Innengewinde versehenen Bohrung 33 ausgestattet werden, undes ist ferner mit durchgeführten Bohrungen 34 für Gewindezapfen 6 oder Schrauben 8 versehen. Das Endstück 30 wird bevorzugt in einer Ausführung aus Stahl oder auch Aluminiumguss hergestellt.

Bei zeitweiligem Verschliessen von Fernheizrohren ist es von Vorteil, die Ausführungsform laut Fig. 4 anzuwenden, da Fernheizrohre Standardmasse aufweisen, die exakt definierten Dimensionsabstufungen folgen. Vor allem im Zusammenhang mit Fernheizrohren entsteht der Bedarf, Druckerprobungen vorzunehmen, und durch die abgebildete Stufenkonstruktion mit Abstufungen 31 kann die Dichtung durch den im Rohrinnerenaufgebauten Probedruck nicht aus ihrem Lager gerückt werden,da die senkrechten Wandungen zwischen den Abstufungen 31nicht nur dieses Auspressen verhindern, sondern gleichzeitig das Dichtungsmaterial axial zwischen Stufen wandung und der achsrecht wendenden Fläche des Rohrendes zusammenpressen.

Die Vorrichtung gemäss Erfindung lässt sich auch im Hinblickauf andere Anwendungszwecke als der Druckerprobung von Fernheizrohren einsetzen. So können z.B. während der Reparatur-arbeiten am Fernheiz-Rohrnetz oder beim Austausch von Rohrleitungen offene Rohre nach Beendigung des Arbeitstages wieder geschlossen oder auch Rohrleitungen zusammengekoppelt werden, sodass z.B. die Wärmeversorgung während der Nachtoder am Wochenende wieder aufgenommen werden kann, wonach sich die Rohre bzw. Rohrleitungen am nächsten Arbeitstag ohne grössere Probleme wieder öffnen lassen.

Selbstverständlich lässt sich die Erfindung durch Kombination der verschiedenen Ausführungen der o.g. Einzelteile modifizieren. Insbesondere ist es denkbar, dass ein Haltestücksowohl mit gerändelten Scheiben 21 als auchmit Schrauben 4 bestückt werden könnte, um bei gewissen grösseren Dimensionen entsprechende Haltekräfte zu erzielen. Darüberhinaus sind im Rahmen der Erfindung weitere Ausführungsformen denkbar, indem die in Verbindung mit Fig. 4 beschriebenen Abstufungen aussenseitig sein könnten, d.h. auf der konvexen Seite des Endstückes 30.

Mit Hilfe dieser Vorrichtung laut Erfindung ist es durch Anwendung von nur einigen verschiedenen Werkzeugen möglich, sämtliche verschiedenen Rohrdimensionen im Bereich von z.B. Fernheiz- oder Wasserversorgungssystemen zu decken. Die Vorrichtung lässt sich darüberhinaus so dimensionieren, dass sie einem Probedruck von bis zu 30 bar und Temperaturen vonbis zu 100 °C standhält. Mit den bisher bekannten Vorrichtungen zum zeitweiligen Verschliessen von Rohren ist es nicht möglich, diese Ergebnisse zu erzielen.

Bei der Anwendung in Verbindung mit Versorgungsrohren aus Gusseisen taucht das Problem auf, dass die Rohre abgetrennt sind, was bedeutet, dass die Trennkanten nicht rechtwinklig zur Längsachse des Rohres verlaufen. Diese schrägen Kanten lassen sich problemlos ausgleichen, indem die Endstücke 11,15,30 schräggestellt und anschliessend die Muttern 12 gespannt werden, bis sie an den Endstücken anschlagen. Vor ähnlichen Problemen steht man bei Kanalisations-, Abfluss-und Wasserrohren aus PVC. Ein zusätzliches Problem entsteht dadurch, dass die abgetrennten Rohrenden oft unregelmässige Kantenflächen aufweisen - ein Problem, das mit entsprechend kräftig ausgelegten Dichtungen 10,13,32 zu lösen ist.

## Ansprüche

1. Vorrichtung zum zeitweiligen Verschliessen von Rohrenden bei Fernheiz-, Wasserversorgungs- oder Abwasserleitungen, mit einem Endstück, einer elastischen Dichtung am Endstück, montiert zur Auflage auf dem Rohrende, Elementen zum Zusammenpressen der Dichtung sowie einem, in Verbindung zu dem Endstück angeordneten Haltestück, das über das Rohrende geführt werden kann, und das mit lösbaren Befestigungselementen versehen ist, welche so eingerichtet sind, dass sie auf der glatten, äusseren Oberfläche des Rohres greifen und somit ein Verschieben in Richtung auf das Rohrende verhindern, **gekennzeichnet** dadurch, dass Haltestück und Endstück untereinander lösbar verbundene Verbindungselemente vom Schrauben-Mutter-Typ sind, vorzugsweise mit auf dem Haltestück befestigten und in Axialrichtung gerichteten Gewindestangen, die mittels Muttern das Endstück halten und gleichzeitig die lösbaren Befestigungselemente in den Bereichen, die zum Anschlag auf die Oberfläche des Rohres berechnet sind, Rillen, Rändelungen oder eine ähnliche Oberflächenbeschaffenheit aufweisen.

2. Vorrichtung nach Anspruch 1, **gekennzeichnet** dadurch, dass die lösbaren Befestigungselemente aus radial gerichteten Schrauben bestehen, die in Gewinden an der Seite des Haltestückes angebracht sind, und wo die Schrauben an deren nach innen gerichteten Kanten mit roulletierten Kratern versehen sind.

3. Vorrichtung nach Anspruch 1 oder 2, **gekennzeichnet** dadurch, dass die lösbaren Befestigungselemente aus auf dem Haltestück gelagerten schwenk- oder drehbaren Teilen bestehen, wo jedes Teil durch eine Feder in Richtung auf das Innere des Haltestücks beeinflusst werden kann, und wo Form und Grösse der Teile so ausgelegt sind, dass der Lagerpunkt für das Teil im montierten Zustand des Haltestückes auf einem Rohr dichter am Rohrende liegt als der Berührungspunkt des Teils mit der Oberfläche des Rohrleitung.

4. Vorrichtung nach Anspruch 3, **gekennzeichnet** dadurch, dass die schwenkbaren Teile aus zirkulären oder ellipseförmigen Scheiben bestehen, die längs der Kanten gerändelt und an Zapfen gelagert sind, die quer über Öffnungen in dem Haltestück angebracht sind, dessen Zapfen durch exzentrisch plazierte Bohrungen in den Scheiben führen.

5. Vorrichtung nach einem der Ansprüche 1 bis 4, **gekennzeichnet** dadurch, dass das Endstück auf seiner, zur Auflage an das Rohrende berechneten Seite Abstufungen aufweist, welche, als in Axialrichtung gesehen, die Form von konzentrischen Kreisen haben, und die mit Gummi belegt sind.

Fig. 1

Slo 101 Eu

Fig. 2

Fig. 3

Slio 101 EÜ

Fig. 4

Sho 101 En